Europäisches Patentamt

European Patent Office

Office européen des brevets

(11) Publication number: **0 307 506**
**A1**

## (12) EUROPEAN PATENT APPLICATION

(21) Application number: 87113696.6

(22) Date of filing: 18.09.87

(51) Int. Cl.⁴: **B05B 15/08 , B05B 13/06 ,
B29C 33/58**

(43) Date of publication of application:
**22.03.89 Bulletin 89/12**

(84) Designated Contracting States:
**AT BE CH DE ES FR GB GR LI LU NL SE**

(71) Applicant: **RIKO SPORT s.r.l.**
**Via Schiavonesca 89**
**I-31030 Caselle D'Altivole (TV)(IT)**

(72) Inventor: **Castellani, Renzo**
**Via S. Martin 5**
**Montebelluna (TV)(IT)**

(74) Representative: **D'Agostini, Giovanni, Dr.**
**D'AGOSTINI ORGANIZZAZIONE n. 17 via**
**G.Giusti**
**I-33100 Udine(iT)**

(54) **Detaching material supply apparatus for dies of shoe-sole injection machine.**

(57) Equipment for the automatic spraying of fluid product on the molds of automatic molding machines involving a plurality of regularly advancing molds coming from a plastic materials injection station and then returning in a closed cycle to the same station, in particular, for treatment with detaching products, and/or lubricants and/or detergents, involving:
- a supporting structure, which is an upright, distant from the molding machine (2) which supports a horizontal arm (5) flagwise at the upper end;
- a trolley (B) sliding on said arm (5) which supports at least one spraying unit (C) by means of a respective hanging arm (13);
- means of control, programming and drive to move said spraying equipment and to control the respective spraying on each mold passing in an automatic manner through a respective spraying station.

F I G. 1

## Detaching material supply apparatus for dies of shoe-sole injection machine

The subject of the present invention is EQUIPMENT HAVING AN ARM TO SUPPORT AUTOMATIC ELECTROSTATIC EQUIPMENT, IN PARTICULAR FOR THE SPRAYING OF DETACHING AGENT ON SHOE SOLE INJECTION MPLDS.

The invention finds a particular and convenient application in the case of utilizing a detaching agent to be applied on a plurality of molds for the respective injection of soles during the working process of shoe-making.

The proceeding, which utilizes detaching products so as to allow the sole realized by injection to be easily separated from the mold, thus avoiding splitting, deformations, and similar, is known in the present state of art. Said system is currently put into act by the utilization of common means of application. The first of these means considered manual operation, where the worker simply adopted a brush or wiping cloth to spread said detaching substance over the mold; a solution which is obviously not cheap or functional, and is slow and hindering. Spraying by pistols, which may be electrostatic or otherwise, has begun to be used in recent times. The pistols are assembled on bases resting on the ground which, given the dimensions, hinder the free movement of the workers around the machine and the respective work places.

The scope of the present invention is to remedy the above-mentioned inconveniences, and in particular, to automate the work without the presence of operators, devising a type of equipment which does not hinder the mold machine workers.

According to the characteristics given in the attached claims, the present invention solves the problem by the realization of a machine to spray a detaching product on the regularly advancing molds of a plastic molding machine, in particular, for shoe sole injection on automatic injection machines. The invention comprises an upright structure which is distant from the spraying station, having a horizontal arm which is adjustable heightwise and able to extend itself above the work place for said spraying, preferably above the height of a man, said arm rotating on the axis of the respective upright and having vertical, sliding means of support along said arm which hang downwards and can rotate, the respective spraying pistol being fixed at the end, as means to control and monitor the programming are also foreseen which are suitable to programme a given cycle of coordinated movement of the equipment to carry out a spraying cycle on each mold that passes through the respective work station of said equipment.

An alternative variation assembles two hanging supports and two respective opposite pistols on said trolley.

The advantages obtained from this solution consist essentially in the fact that the process of application of the detaching agent becomes much more rapid, does not need operators, and the absence of obstacles around the machine allows a greater freedom of movement for personnel assigned to the injection plant.

The invention is hereafter explained in more detail with the help of the figures showing preferential solutions for realization, the execution details of which are not intended as limiting but only as examples.

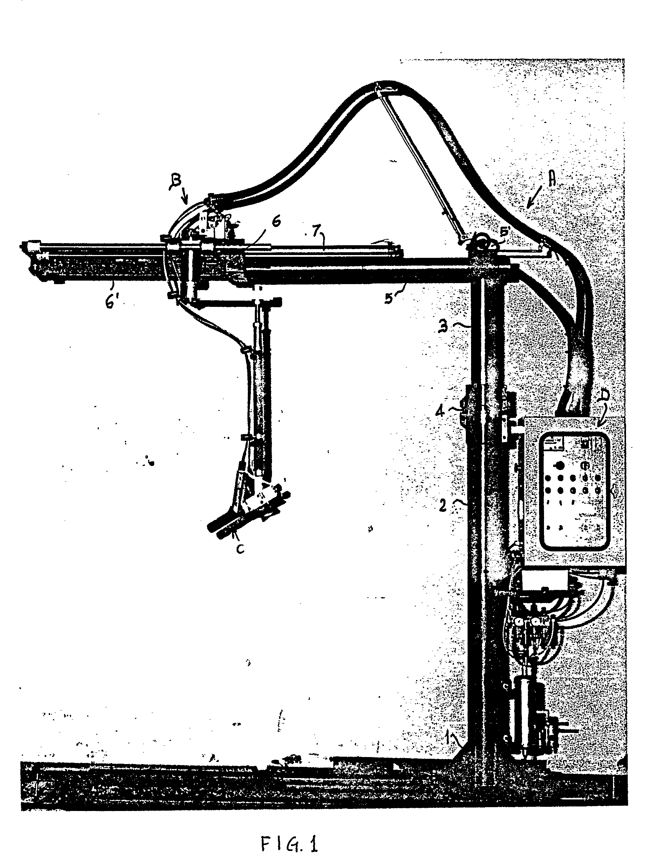

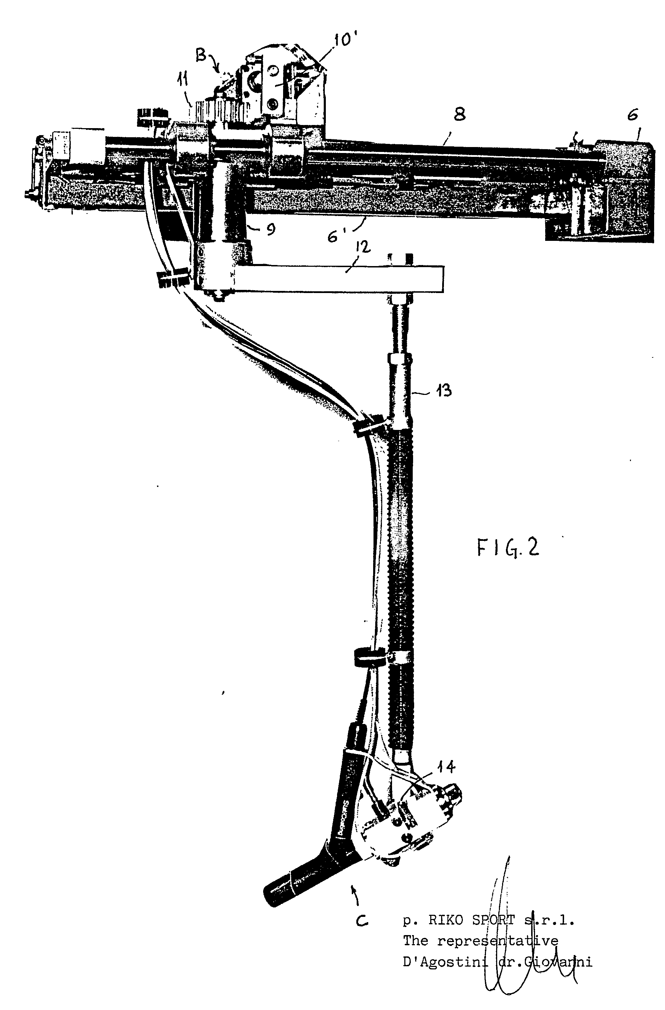

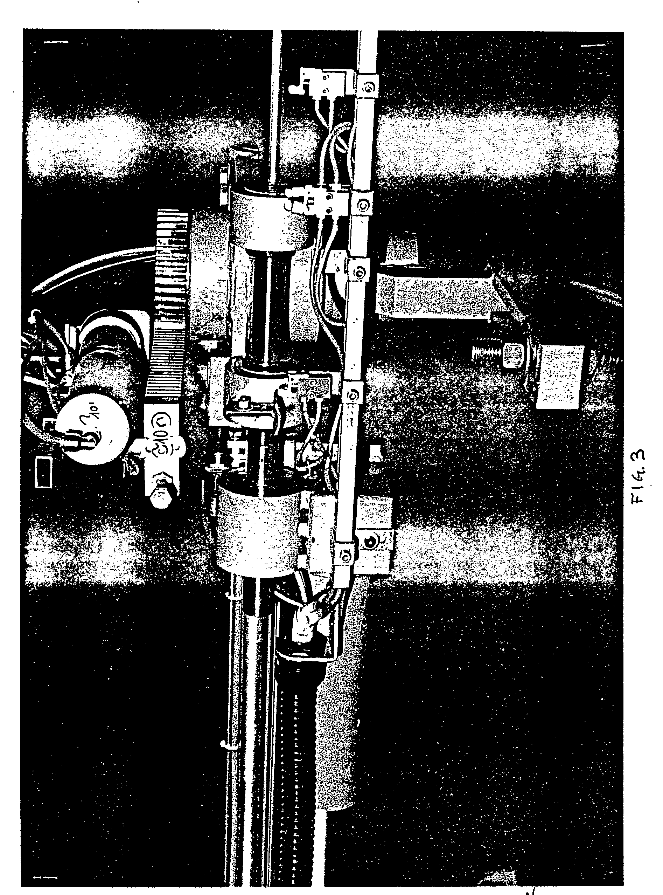

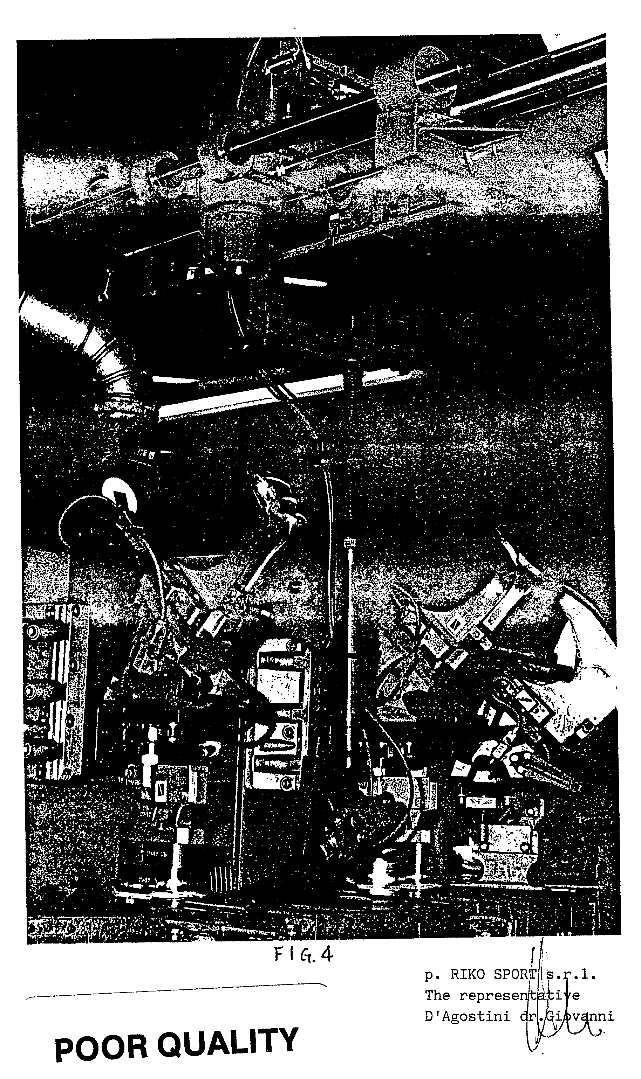

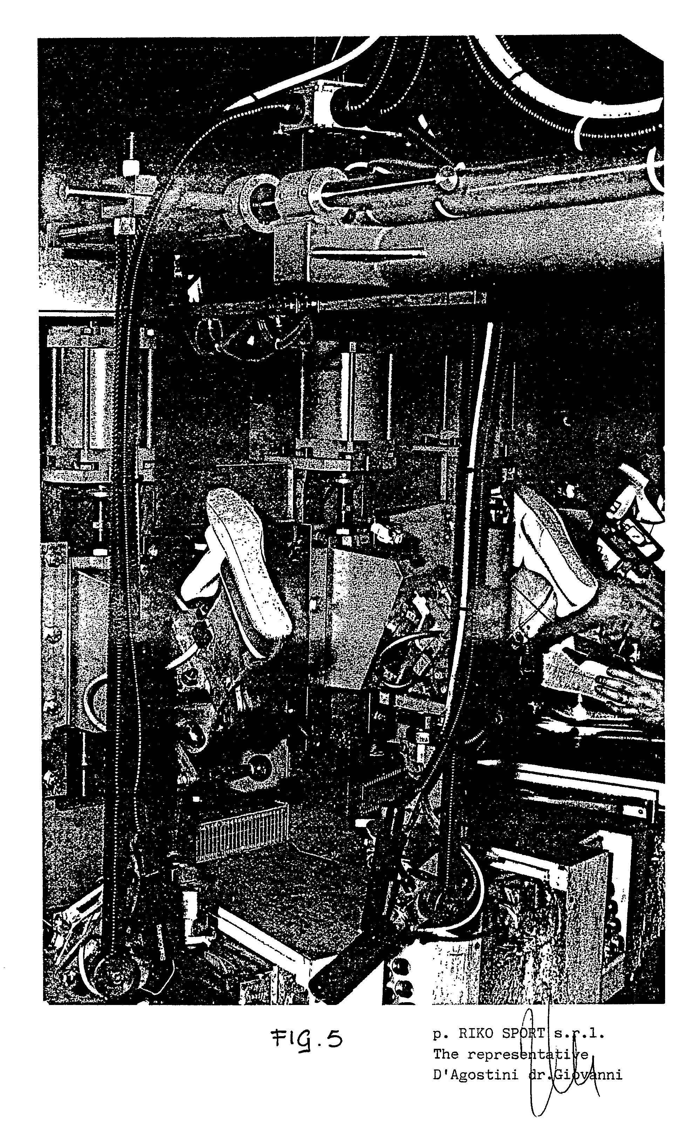

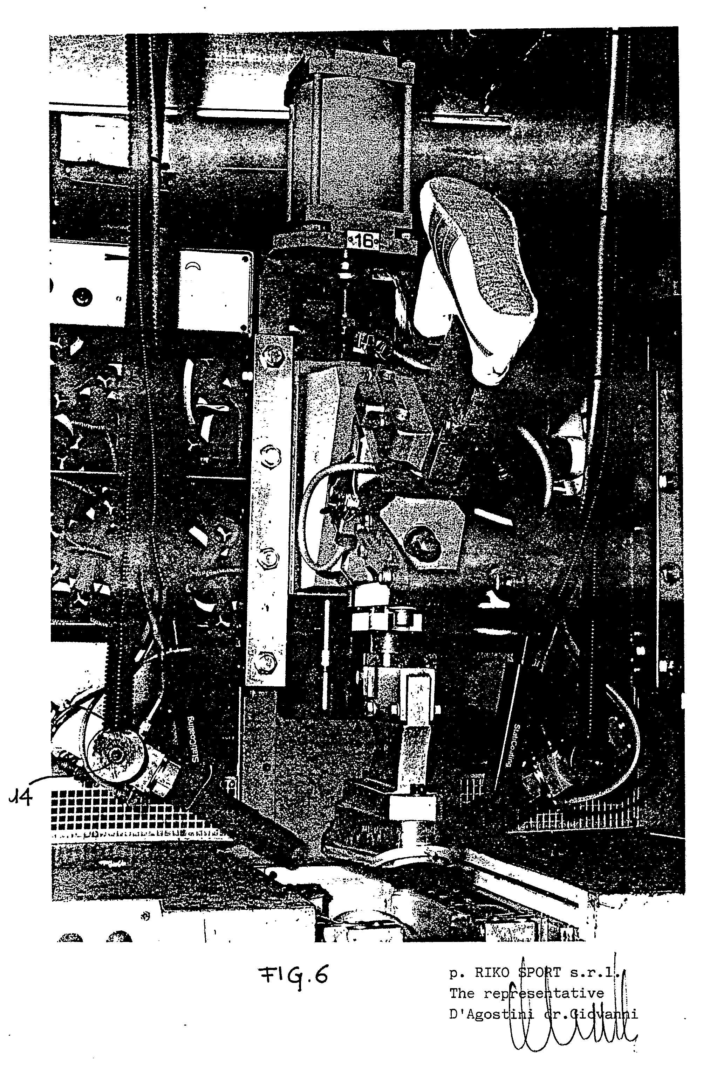

Figure 1 shows an assembly view of the equipment according to the invention in the first hanging, rotating, preferential solution; Figure 2 shows an enlarged view of the detail of the sliding device to horizontally support and rotate the electrostatic pistol, as per the previous figure; Figure 3 shows a further enlargement of the detail of the trolley for sliding and rotation of the electrostatic pistol, as per the previous figure; Figure 4 shows an underneath view of the sliding trolley with respective rotation device and the operation system of the pistol when spraying the respective mold; Figures 5 and 6 show the machine version of the second solution, having opposing pistols without the rotation device, and showing the respective manner of operation.

As can be seen from the above-mentioned figures, the invention consists in a plant (A) of the type having a projecting arm which basically forms an upside-down "L", constituted by a base (1) which can be fixed to a supporting surface to which a vertical support (2) is fixed and inside which slides a rod (3) to regulate the height by means of suitable locking systems (4). At the upper end of the rod (3) a projecting arm (5) is fixed horizontally through a detachable connection (5′), which allows the length to be adjusted too. In particular, the horizontal arm (5) has a round section and supports a support slide (6) which can be fixed in position and which, in turn, has a respective arm extension for a pair of slides (8) on which a trolley unit (B), driven by a cylinder (7), slides longitudinally. In the first preferential solution, the trolley (B) supports a hanging structure (12,13)), guided on a vertical axis (9), for the spray pistol (C) which revolves on a horizontal axis. The hanging support (12,13) is keyed to a gear wheel (11), which is, in turn, driven by a rack (10) moved by a respective fluid dynamic cylinder (10′).

In this way, the spray pistol (C) can be revolved in all directions in a robot manner, according to a predetermined programme of succession of movement controls. It will be noted that the hanging structure (13) is connected to an upper, horizontal, rotating arm (12) and is adjustable in order to allow a variation in length of said arm. Once in position, all this permits the respective lower pistol to effect the desired course and orientation of the spraying.

In the alternative solution, the said trolley (B) supports a horizontal arm which carries on its opposite ends the two opposing pistols, the respective hanging axes of which can be fixed in an adjustable position.

For example, in the first solution, the equipment (A), which is synchronized with the injection system and the movement of the molds of the molding machine, operates as follows:
- when the mold, on which the successive phase of injection is to be carried out, arrives in correspondence with the extension of the electrostatic pistol, the trolley (B) starts a lengthwise course by means of a sensor, bringing the pistol (13) up to the side of the mold, where a first spraying is carried out. The electrostatic pistol (C) successively turns through 180°C by means of the cylinder (10') placed on the trolley (B), and effects the spraying on the other side. Once said operation is terminated, it will return to the starting position for a successive operation on another mold.
As can be seen from the variation, the trolley (B) foresees a fixed arrangement for the opposing pistols (figs. 5,6) instead of being provided with the rotation device.

The execution details may naturally vary without altering the invention's field of protection, defined by the characteristics laid out in the attached claims.

## Claims

1. Equipment for the automatic spraying of a fluid product on the molds of automatic molding machines, involving a plurality of regularly advancing molds coming from an injection station of plastic material, and then returning in a closed cycle to the same station, in particular for treatment with detaching products, and/or lubricants and/or detergents, involving:
- means of control, programming and drive to move the said spraying equipment and to control the respective spraying on each mold passing through a respective spraying station in an automatic manner, characterized by the fact that, apart from said means, it is constituted by:
- a supporting structure, which is an upright, distant from the molding machine (2) and carrying a horizontal arm (5) flagwise at the upper end;
- a trolley (B) which slides on said arm (5) which supports at least one spraying unit (C) on a respective hanging arm (13).

2. Equipment, as per claim 1, characterized by the fact that the height of said horizontal arm (5) is adjustable (4) and extendable (5').

3. Equipment, as per claim 1, characterized by the fact that the trolley (B) slides axially forwards or backwards by means of a pneumatic cylinder (7), sliding on two supporting, side guides (8).

4. Equipment, as per claim 1, characterized by the fact that a support of said hanging arm (13) is arranged on said trolley (B), and can be rotated by programmed command (10,10',11,9).

5. Equipment, as per the previous claim, characterized by the fact that said rotating support utilizes the intermediateness of a rotating arm (12), along which the respective hanging arm (13) is fixed in an adjustable position.

6. Equipment, as per claim 1, characterized by the fact that said spraying equipment consists in a pistol (C) assembled in a revolving manner on a horizontal axis at the end of said haning arm (13).

7. Equipment, as per claim 1, characterized by the fact that two hanging structures (13) are fixed to said trolley (B), and have respective means of spraying (C) arranged respectively one on one side and one on the other side of said arm, the respective means of spraying revolving in opposite directions to each other.

8. Equipment, as per claim 1, characterized by the fact that the pistol supporting stirrup (12) presents a lever driven by suitable means, which can lift the electrostatic pistol sideways so as to allow passage on to the successive mold.

9. Molding machine or system possessing equipment which has the characteristics of the previous claims.

FIG. 1

p. RIKO SPORT s.r.l.
The representative
D'Agostini dr Giovanni

FIG.2

p. RIKO SPORT s.r.l.
The representative
D'Agostini dr.Giovanni

FIG.3

p. RIKO SPORT s.r.l.
The representative
D'Agostini dr. Giovanni

FIG. 4

p. RIKO SPORT s.r.l.
The representative
D'Agostini dr. Giovanni

**POOR QUALITY**

FIG.5

p. RIKO SPORT s.r.l.
The representative
D'Agostini dr.Giovanni

FIG.6

p. RIKO SPORT s.r.l.
The representative
D'Agostini dr.Giovanni

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 479 737  (JALLATTE)<br>* Page 3, line 6 - page 4, line 13; figure 1 *<br>--- | 1-3,9 | B 05 B   15/08<br>B 05 B   13/06<br>B 29 C   33/58 |
| Y | DE-A-2 620 708  (H.W. HAPKE & CO.)<br>* Whole document *<br>--- | 1-3,9 | |
| A | US-A-3 865 525  (DUNN)<br>* Column 2, line 64 - column 3, line 11; figure 1 *<br>--- | 4,5 | |
| A | DE-A-  743 552  (ZWICKER)<br>* Page 2, lines 17-20; figures 1,2,4 *<br>----- | 6 | |

TECHNICAL FIELDS
SEARCHED (Int. Cl.4)

B 05 B
B 29 C
B 22 D

The present search report has been drawn up for all claims

| Place of search | Date of completion of the search | Examiner |
|---|---|---|
| THE HAGUE | 09-05-1988 | JUGUET J.M. |